# EUROPEAN PATENT SPECIFICATION

(11) **EP 1 981 748 B1**
(45) Date of publication and mention of the grant of the patent: **07.11.2012**
(21) Application number: 07705171.2
(22) Date of filing: 07.02.2007
(51) Int. Cl.: G08G 1/04, G06T 7/20, B61L 25/02, G01P 3/68

(54) **SYSTEM FOR MEASURING SPEED OF A TRAIN**
SYSTEM ZUM MESSEN DER GESCHWINDIGKEIT EINES ZUGES
SYSTEME POUR MESURER LA VITESSE D'UN TRAIN

(30) Priority: 07.02.2006 GB 0602448
(43) Date of publication of application: 22.10.2008
(73) Proprietor: Shenton, Richard, Guildford, Surrey GU4 7UH (GB)
(72) Inventor: Shenton, Richard, Guildford, Surrey GU4 7UH (GB)
(74) Representative: Stevens, Jason Paul
(86) International application number: PCT/GB2007/000440
(87) International publication number: WO 2007/091072

(56) References cited:
- EP-A1- 1 383 098
- WO-A-02/15144
- WO-A1-02/058984
- DE-A1- 10 063 598
- DE-A1- 19 529 986
- DE-A1- 19 627 938
- DE-A1- 19 736 774
- GB-A- 2 244 581
- US-A1- 2003 030 546
- US-A1- 2004 164 851

## Description

The present invention relates to a system for measuring the speed and position of a train.

Most operational control systems currently in use with trains make use of fixed block signalling technology. When trains enter or leave fixed lengths of track (referred to as 'blocks'), they are detected by infrastructure-based systems such as track circuits or axle counters. The entry of the train into the block section is controlled by colour light signals. The technology is costly to install and maintain, and limits the capacity of the railway network (as only one train can typically be in a block section at any time, irrespective of train speed).

In Europe, much R&D effort has gone into a specifying a new generation of signal technology, particularly the European Rail Traffic Management System (ERTMS) defined under the European Directive 98/48/EC on the interoperability of the trans-European high speed rail system. This aims to remove the need for colour light signals and associated infrastructure at the trackside, by communicating signalling information directly to the train by radio.

Initial implementations of new technology continue to use infrastructure based-train detection systems. These train detection systems, which use extensive cabling along the track, are prone to failure and are the cause of many train delays. They also constrain the capacity of the network.

Replacing infrastructure-based train detection by train-based systems offers the opportunity for significantly greater benefits to be realised at lower cost. Different technologies are being developed for such train-based detection and location systems. To determine precise location at a particular point, 'balises' placed in the track are detected by transponders mounted under a train. Doppler radar systems are used to measure speed. Distance is measured using the train odometer. This variety of different systems adds to system cost and complexity. GPS technology is being investigated as a lower cost approach, but this has its limitations in deep cuttings and tunnels.

According to a first aspect of the invention as defined in appended claim 1, there is provided a system for determining the speed of a train, comprising: an image capture device, for mounting on the train in such a position that it can capture a sequence of images of the environment ahead of or behind the train; and an image processor, for processing the images captured by the image capture device, wherein the image processor processes said sequence of images by transforming each captured image of the environment ahead of or behind the train to give an image looking down on the tracks, and derives the speed of the train from the apparent motion of objects in the transformed images.

In a preferred form, the system can also determine the position of a train, in that the image processor also recognizes trackside markers, each of which uniquely identifies its position, thus deriving the position of the train from the identity of the marker.

According to a general aspect of the invention, there is provided a system for measuring train speed and position which uses an image capture device (one or multiple cameras) to take a sequence of timed images from the front or rear of the train. The images are then analysed to determine train speed and position. By comparing the scenes from images taken a short time apart, the distance that the train has moved can be determined. The time the train takes to move the distance between the images is used to determine the train speed. The images are also analysed to identify specific markers placed at the trackside at fixed known locations. When the system recognises that a particular marker has been passed, the position of the front or rear of the train is known. The markers can be used to correct built-up position and speed errors in the system and to provide sufficient certainty of position for safety critical operation of switches and crossings.

If a rear-facing camera is incorporated into the system, then the system can be used to determine when the rear end of the train has passed a critical point (such as a switch or a crossing) by identifying the markers associated with that critical point when they appear in the field of view of the rear-facing camera. This information (that the rear of the train has passed the critical point) can be passed on to a control system, which may control the train or the infrastructure (points etc).

The various aspects of the invention allow a single system to provide the capability for train-based measurement of train speed and position. The use of trackside markers provides a low cost method of accurately and reliably determining the position of the train at switch, crossing and other important locations.

A battery-powered portable version of the unit can be used for rolling stock that is not appropriate for permanent fitment. For example, it can be mounted on the last wagon of a freight train.

Before a specific description of the system and its components, the use of the system to determine train speed and position will be described.

In order to determine the speed of the train, an image capture device at the front of the train takes a sequence of images, and records the time at which each was taken. The images are processed to recognise stationary objects (usually objects disposed between the rails) that are present in the images. The change in position (and possibly size and orientation) of the objects between images is used to calculate the relative position of the camera or cameras when each image was captured, and thus the speed of the train.

Once the change in camera position between images is known, the times at which the images were taken can be used to determine the train speed. For improved accuracy the system estimates the distance travelled along the rails, rather than the straight line distance between two points.

The system outputs the position and speed estimates for the train, with associated confidence measurements.

Information collected from the image analysis process is used continuously for camera and image calibration, eg height of the camera above the track, pointing angle, focal length, lens distortion, etc., and to ensure that the camera setting (such as height and pointing angle) have not changed. Similarly, it can be used to change camera settings (eg day/night or clear/mist conditions).

Markers can be placed at the side of the track, and these markers and any information encoded therein can be recognised by the system. When the system determines that it is passing these markers it can output this information to other systems. If the markers are at known positions, the location of the train can be determined.

The design of the markers should be such that they can be recognised in all environmental conditions. In addition, it is possible to uniquely identify which marker has been passed. The design of the markers is sufficiently distinct that other objects cannot be mistakenly identified as markers. In a preferred form, the markers are in the form of 2D barcodes, which can be easily recognized as such and decoded by the image processor.

There may be many markers at the trackside (eg to provide position information on different tracks or routes). The system is designed so that position reports are only generated for markers that are directly relevant to the train. For example, identical markers can be positioned at either side of a particular track, and the system can be constrained to report only when it passes between two identical markers. If 2D barcodes are used, then a marker can encode whether it is relevant to the track to the left, to the track to the right, or both. It is also possible to limit the field of view of the camera so that it can only see markers directly to the left or right of the running track.

The markers placed on either side of the track can be designed so that the combination looks different from either side. This will allow the system to detect its direction of travel past the marker (ie whether the train is going 'up' or 'down' the track). If 2D barcodes are used, then this information can be encoded into them.

When a train passes the markers, the system outputs the identity of the markers and the time they were passed. To reduce 'dead reckoning' errors, the position of the train (determined as described above) is referenced to the last marker passed.

Specific markers can be used at critical points (such as switches and crossings) where it is important to know that the entire length of the train has cleared the critical point. A rear-facing camera at the rear of the train can be used to capture images of the environment behind the train, and if these markers are identified in the images, then it can be determined that the rear of the train (and thus the entire length of the train) has passed the critical point. This information can be used in a train control system.

Further, the system may be arranged so that a warning is given to a driver if the speed of the train is too great for its current position (for example, if it is approaching a bend too quickly). The warning may also be passed on to a train control system.

Specific embodiments of the system and its components will now be described with reference to the accompanying drawings, in which:
Figure 1 is a schematic view of the system as it would be installed in the driver's cab of a train;
Figure 2 is a schematic view of the environment in front of the train when a first embodiment is used;
Figure 3 is an image of the environment in front of the train when a second embodiment is used;
Figure 4 shows a transformed version of the image shown in Figure 3;
Figure 5 shows the image of Figure 4, with horizontal and vertical strips used in speed detection highlighted; and
Figure 6 shows a 2D barcode.

The main components of the system are:
- image capture device;
- trackside markers;
- image processor; and
- train control interface.

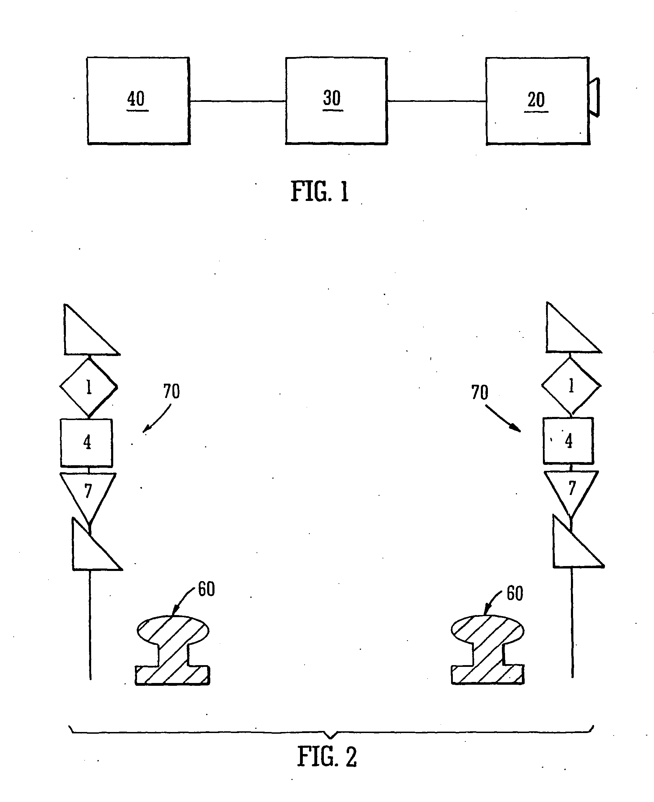

The image capture device 20, the image processor 30 and the train control interface 40 can all be provided in the driver's cab 10 as shown in Figure 1.

The image capture device captures images of the track ahead (or behind) the train, which images are used for speed, distance and position measurements. The device is designed to work in all weather conditions including day, night, tunnel darkness, snow and fog.

The system can use generally available visible/near infra-red (IR) camera technology with a CCD detector in order to keep costs low and to ensure commercial availability of products. The cameras are capable of operating from bright sunlight down to very low light levels (eg 0.01 lux). This range may achieved by a switchable filter to adjust from day to night light levels (cf Sony camcorders with Night Shot capability). The image size is about 780 x 500 pixels with frame rates in the region of 25-30 Hz.

In a preferred form, the front-facing camera can be installed in the driver's cab of the train. However, this can cause problems with IR cameras, as the windscreens of driver's cabs often have IR cut-off filters. Thus, it is currently preferred to use monochrome visible light cameras, which can operate down to 0.5 lux.

This will give some night-time capability, but it is preferred for additional night-time illumination to be provided to give sufficient viewing range. Train headlights will provide visible illumination in the forward direction, but tail lamps will not provide sufficient power in the rear direction. Providing strong visible illumination at the rear of the train may cause confusion as to which is the front and rear of the train and introduce safety hazards. Thus, the rear of the train may use day/night IR cameras and IR illumination, which is invisible to the human eye.

In addition to night-time operation, illumination is also required when inside tunnels. Activation of the illumination device can be triggered either by an ambient light detector on the camera or directed by the processor unit.

As mentioned above, the system can include a rear-facing camera, so that it can be determined whether the rear of the train has passed a particular point. The rear carriage of a particular train may only be the rear carriage for that particular trip (for example, the rear carriage may just be an ordinary freight wagon), and so a rear-facing camera should be provided in a removable unit, which can be attached to and detached from a carriage as necessary. It is convenient for such a unit to be battery-powered, and in order to reduce power consumption, the rear-facing camera should only operate when directed to do so. Furthermore, the rate of image taking should be controlled by the processor unit, as this will be varied dependent on, for example, train speed, to achieve optimum results.

An accurate and dependable timer can be incorporated into the unit to record the time at which images are taken. Alternatively, it may be possible to simply rely on the frame rate of the camera.

Camera settings, such as the focal length of the lens, may be controlled by the processor unit.

The image capture device is installed at the front (or back) of the train pointing forwards (or backwards) along the track, The field of view of each camera can be such that the either side of the route is visible together with the tracks. However, in order to maximize visibility of the tracks (especially in tunnels, where the glare from the tunnel mouth can adversely affect the camera setting), it is preferred for the horizon to be above or close to the top of the image.

Video from the image capture device is streamed to the image processor over the communication links.

Position markers mark specific points on the railway. They can be used as part of interlocking controls to control a train through switches and crossings. In addition, they can provide a position 'fix' to remove dead reckoning errors in the positioning system. Because they are used to precisely locate trains, they are important for safety. The marker should be:
- easily recognisable by the positioning system in all conditions;
- distinguishable from other trackside objects;
- uniquely identifiable (ie not confused with other positioning markers); and
- at a fixed known location.

As the positioning system is based on images, it is possible for the markers to be identified by their shape. For example, readily identifiable shapes such as squares, triangles, circles, and so on can be used, and the marker can consist of a combination of shapes to distinguish it from other trackside objects such as signs. However, it is preferred for the markers to be in the form of 2D barcodes, and these will be described in detail later.

The markers should be placed sufficiently high above the ground to clear snow or flood water levels. Further, the markers should be designed to prevent them from being obscured by ice formation or snow deposits. For example, they can be thin and flat to avoid snow build-up and limit icicles.

The markers are recognisable for a train moving in either direction on the track. By having a marker either side of the track, the positioning system acts only on markers relevant to the track on which the train is running. If the markers on either side are distinguishable from each other, the direction of the train past the marker can be established.

On occasions, there may not be sufficient clearance to position the markers either side of the track. In this case the markers could be fixed horizontally either within the rails, or at the sides of the track, for example on platform walls. The 'top' and 'bottom' of the marker are distinguishable in order to determine the direction of approach.

The markers may be labelled so that they are 'readable' by drivers or other personnel.

Figure 2 shows the environment in front of a train where such markers are used. The rails are schematically indicated at 60, and two markers are indicated at 70.

As can be seen, each marker consists of a sequence of shapes, formed from vertically-arranged flat plates fixed to a pole. The plates are mounted some distance above the ground, to clear snow or flood water levels. As the markers are vertically-arranged flat plates, snow will not build up on them.

In this embodiment, the top and bottom plates are right isosceles triangles; these shapes are only used as the top and bottom of the marker, and the direction in which they point allows the system to determine whether the markers are being approached in an up or down direction.

Between the top and bottom plates are three other plates of differing shapes, and the particular sequence of shapes is unique to this marker. The system can recognize the shapes used, and thus identify the marker and so the position of the train. The plates also have human-readable numbers marked on them.

Further, measurement aids can be installed along a route to provide additional features to help the positioning system take speed and distance measurements. For example, they could be used on long featureless straight sections of track where there are few objects that the positioning system can recognise and track.

For maximum benefit, and in particular for single-camera operation, it should be possible for the imaging system to scale the measurement aids. The measurement aids can thus be of known size or linked to other features of known size.

For maximum benefit, the measurement aids are readily recognisable in all weather conditions and when approaching from either direction. Unlike position markers, the aids are not associated with a particular position on a specific track; they can therefore be installed at any convenient trackside location.

The image processor analyses the images received from the image capture device and determines train distance, speed and position information. There are many possible implementation options for the image processing functions and the following describes one particular approach based on a single camera in each image capture device. It should be appreciated that other approaches are possible. In particular, the use of stereoscopic cameras in each image capture device lessens many of the distance-based constraints of the single camera approach.

The image processor carries out the following functions:
- low level processing of each frame;
- identification of points of interest in each frame;
- search for position markers;
- search for previous tracking points or new potential tracking points;
- motion analysis; and
- determination of track position and gauge.

Once installed in the train the image processor is initialised with the camera parameters. For single camera operation, the camera must be calibrated such that the position of the optical centre in the image is known to the image processor, together with the angular separation that each pixel represents from the optical axis. The image processor is also provided with initial information on the height of the camera, its pointing angle and the position of the 'Track Centre'. The Track Centre is the point mid-point between the two straight running rails at the bottom of the image frame. The image processor is also provided with information on the track gauge (standard distance between the running rails).

Low level processing of each frame takes place using standard image processing techniques to improve the usability of the image, for example, histogram equalization to increase brightness range in low brightness areas.

A corner detector is then used to identify potential points of interest in the image. An example corner detector is provided by H P Moravec, Towards automatic visual obstacle avoidance, Proceedings of the 5th International Joint Conference on Artificial Intelligence, Carnegie-Mellon University Pittsburgh, PA August 1977.

Those corners that are connected to motion are determined by differencing two or more images in the video stream.

The corner points are used in the analysis of tracking points and to search for position markers.

The pixel neighbourhoods of 'moving comers' are searched to determine whether these contain position markers. The triangles that are used in position markers are sought first. Straightforward triangle templates are used to match similar triangles in the image. Two templates are used corresponding to the left and right pointing triangles in the position markers.

When a triangle is detected, it may correspond to the whole of the triangle in the position marker (or other object), or just the tip. Templates of increasing size are matched with the image to determine the size of the marker (or other object).

Vertically mounted markers are detected when there are two triangles of the same size located one above the other in the vertical direction. The image between the two triangles is then examined to identify other components of the marker. This again uses simple matching techniques for appropriately scaled templates of circles, squares etc.

If all the marker components are detected with sufficient confidence, the marker itself is detected and its identity is determined. Marker pairs are identified by two markers with the same identity.

The system reports that the train is passing the marker pair when both markers leave the field of view of the camera, one marker to the left hand side of the Track Centre (see above) and the other to the right hand side.

The above approach for vertically mounted markers is used similarly for horizontally mounted markers, with the necessary adjustments for marker positioning and geometry.

The 'moving corners' in each frame are used in the tracking process. When one of these points of interest is used to determine train position and speed it is termed a tracking point.

In the analysis of previous frames, tracking points have been identified and used to calculate train position and speed. In addition, points of interest in previous frames have been identified as potential tracking points.

The first step is to locate the position of previous tracking points in the current frame. From previous estimates of vehicle motion, the region of the current frame within which a tracking point is likely to be found can be estimated. Points of interest within the current frame are identified and the pixel neighbourhood around these points is matched with the pixel neighbourhood of the tracking point from previous frames. The best match is used as the location of the tracking point within the new frame.

A similar process is used to look for the correspondence of potential tracking points from previous frames with the current frame. Once a potential tracking point has been located with sufficient confidence in successive frames, it can be designated as an actual tracking point that can be used for determination of train speed and position.

Points of interest that have no correspondence with actual or potential tracking points from previous frames can be designated as potential tracking points for future frames.

The tracking points are used to determine the motion of the train. Each of the points in the real 3D world is mapped to a point on the 2D video frame. As the train moves the position of the 3D points relative to the train changes, dependent on the train's velocity. The points also move position on the corresponding video frame.

The mapping between 3D world position and 2D frames is a projective geometry transformation. The sequence of frames provides time and hence also velocity information. The position of the tracking points in the real 3D world and the velocity of the train can be estimated by determining the transformation which best fit the tracked points in time and space. For more details see, for example, The Geometry of Multiple Images, Fuageras and Quang-Tuan Luong, MIT Press. Note that it is necessary to take account of other possible motion in the field of view, particularly passing trains.

Only the relative positioning of the tracking points can be ascertained by this approach. To determine 'real world' positions, real scale and co-ordinate axis information need to be provided. This information can be derived from the image of the track in the video frame.

The XY plane is defined as the plane containing the tracks (see below for how the position of the tracks is determined). The direction of the X-axis can be set arbitrarily and could for example be in the direction of travel along a straight track section. Position information is calculated as the distance moved along the track and therefore the specific direction of X and Y-axes is unimportant.

Scale information is obtained from the track gauge (distance between the running rails). This information is provided to the system at initialisation. An explanation of how the track gauge is identified in the image frames will be given below.

The basic method to identify track position is to extract the image region around the track centre at the bottom of the image. As the top surfaces of the running rails are typically the brightest portions of this part of the image, the region is thresholded and then processed using a Hough transform to recover the intercept and gradient parameters of the main lines in the image.

The lines closest to the track centre are typically those of the inside edge of the running rail. However, the line information is filtered and correlated over time, so that short periods when switch and crossing rails or other rails and straight edges (eg from shadows) are found between the running rails do not result in these objects being mistakenly identified as running rails.

Once the running rails are identified, tracking points associated with a particular point along the rails can be positioned in '3D'. For example, the point where a trackside marker meets the ground can be associated with the track point with which it is 'level' in the image. In the absence of any trackside markers, tracking points that pass beneath the camera between the running rails can be assumed to be at track height and hence associated with the track at that 'level' in the image. Using the height of the camera, its pointing angle and knowledge of the angular distance of the tracking points from the optical centre, the 'real world' position of the tracking point from the camera can be determined by geometry. A similar approach can be used for markers of a known size, without reference to the tracks.

Once the tracking points are located in 3D, the scale and co-ordinate axes can be defined. A natural set of co-ordinates is for the track to lie in the XY plane with the Y axis set in the initial direction of motion.

The track information can also be used for calibration of the external and internal parameters of the cameras. As the tracks are parallel, they converge at the 'vanishing point' in the projected image. In general, the vanishing point can be used in determining the pointing angle of a camera relative to the plane and direction of the tracks. The track also provides data for the calibration of internal camera parameters. For more details see 'Image Processing, Analysis, and Machine Vision', Sonka, Hlavac, Boyle, PWS Publishing, 1999.

A second, and presently preferred, embodiment will now be described. It has been found that reliably identifying and tracking 3D points, as described above, is computationally intensive, and so in a preferred method, the speed is derived from images of the track bed.

As a first step, the projection transformation which maps the 3D world onto the 2D image captured by the camera is undone, to give an image which appears to look directly down onto the tracks. The necessary information for this is contained within the track geometry. In particular, the "vanishing point" (the point at which all parallel lines which run perpendicular to the image plane seem to converge) can be ascertained.

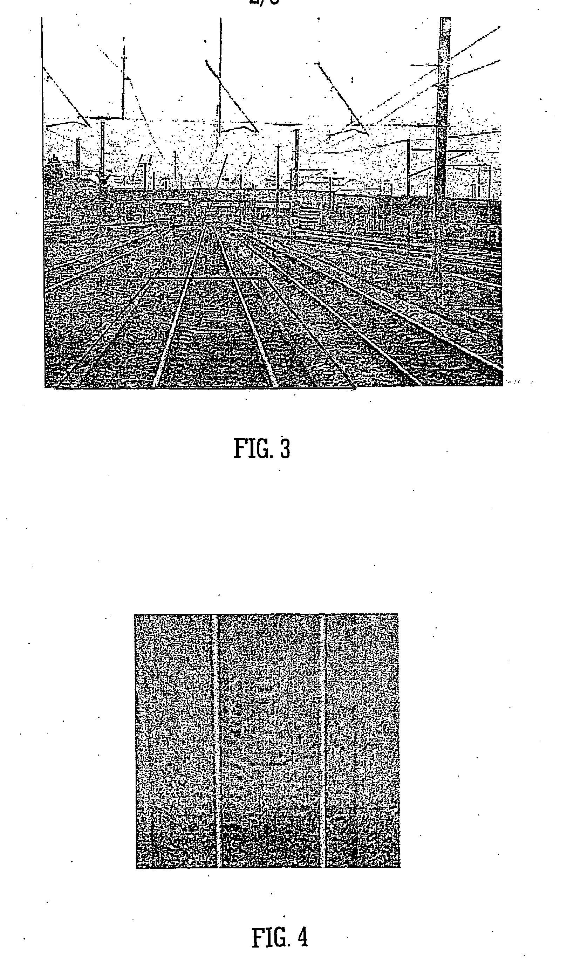

Figure 3 shows an image as captured by a camera of the environment in front of the train, showing how the parallel lines of the rails seem to converge. (A similar image, of the environment at the rear of the train, could be captured using a rear-facing camera; the direction in which the camera faces is immaterial). Using this information, the part of the image A bounded by the thick black lines can be transformed into image B (shown in Figure 4), which appears to look down on the tracks. It is less computationally intensive to work on 2D images such as those of the type shown in Figure 4.

The speed of the train is then estimated using optical flow. This is a standard technique for deriving the motion of objects from the displacement of pixels through an image sequence.

The approach used in this embodiment estimates how a strip of pixels has moved between image frames. Multiple strips are used, to allow multiple measurements to be made from each frame. The results are statistically combined to give a motion estimate for each frame. The statistics of the multiple measurements also provide a quality or confidence measure of the speed estimate, which can be used in safety management.

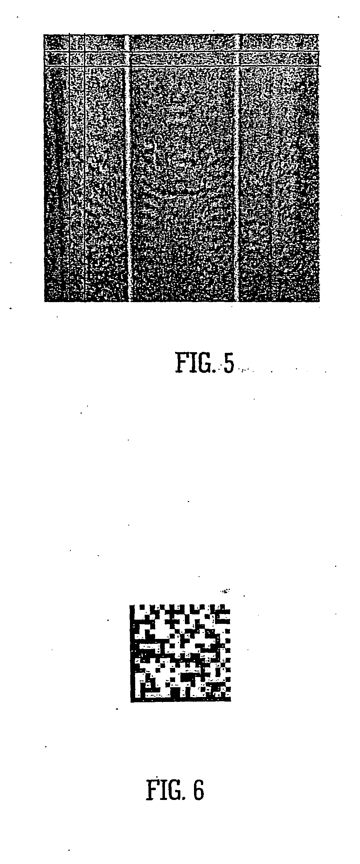

The method can use strips which are horizontal or vertical in the image frame. Two such strips (one of each type) are shown in Figure 5. It has been found that there is enough "texture" in the ballast and in other objects in the track to allow the displacement of each strip from frame to frame to be determined.

The initial estimate of train speed is made in pixels per frame (for example, a horizontal strip moved down ten pixels from one frame to the next in images taken using a front-facing camera). A calibration factor is then used to convert the number of pixels to the distance covered between frames. To obtain this factor, the camera needs to be calibrated prior to use. The essential calibration information is the field of view of the camera and the track gauge of the infrastructure, but alternative methods can be used).

For improved accuracy, the speed estimate can be refined to take account of track curvature and train suspension effects (causing motion of the camera relative to the track). One approach to make these refinements is to use information on the pointing angle of the camera relative to the rails combined with geometrical principles. The position of the rails in Fig. 4 can be extracted using a method similar to that described below for detecting the edges of the barcodes. Each edge of the rail is detected with an edge detection filter and "edgelets" are identified. Parallel edgelets with an appropriate separation are classified as rail candidates, and the other edgelets are discarded. The remaining edgelets are connected into chains that identify the rails.

Once the distance covered by the train between frames is known, the speed of the train can be calculated from the (known) interval between frames.

A particularly preferred form of marker will now be described.

The markers described above had information encoded in them through their shapes. However, this has a number of limitations (not least in the amount of information that can be encoded), and so it is preferred to use 2D barcodes as markers. A suitable form of 2D barcode (the Datamatrix barcode) is shown in Figure 6, and the following description will be concerned with this type of 2D barcode. However, it will be appreciated that other forms of 2D barcode can be used.

The left and bottom edges of the Datamatrix 2D barcode have solid black bars, allowing the barcode to be located. The right and top edges have a synchronization pattern of alternating black and white, which allows the module width and offset to be determined.

To identify the barcode, the black edges are detected. The image is passed through a Sobel edge detection filter, and the edge image is filtered using a non-maximal suppression filter to accurately locate the position of the edge.

Straight runs of edge pixels which have an edge direction perpendicular to the run are located and identified as "edgelets". Straightness constraints are placed on these edgelets to avoid following edges around corners, and finding other curved images in the image.

From the list of edgelets, pairs which could be used to describe the edges of a Datamatrix barcode are sought. Edgelets will be paired if they meet the following criteria:
- they are within 22.5° of being perpendicular;
- the separation between their centres is no more that 85 pixels;
- a point of intersection between the continuation of both lines is not within the centre 60% of either edgelet;
- the centre of the each edgelet form the point of intersection is more than 60 pixels; and
- the gradient of the intensity edges associated with both edgelets is decreasing (ie white to black) in the direction of the included angle.

Once candidate pairs of edgelets have been found, the lines are defined as being from the point of intersection of the two lines (which may lie beyond the length of the identified edgelet) to the far end of either edgelet. The edgelets may not cover the whole length of the border. Both edges are therefore allowed to grow away from the intersection point. The average dot-product of the edge vector of each pixel under the line with a vector perpendicular to the line is calculated. The line is allowed to extend so long as the equivalent dot-product of the next pixel is greater than one-quarter of the average value for the line. Typically, by the end of this step, the two edges describe two full sides of the Datamatrix barcode.

The shape of the barcode can then be taken as that of the parallelogram, described by the two edges (that is, the opposite sides are parallel). Each Datamatrix barcode is then extracted from the image by resampling the parallelogram, to give a square 200 by 200 pixel image. A bi-cubic interpolation routine is used to maintain a reasonable level of edge information, Also, the intensities across the image are normalized using locally calculated minimum and maximum values.

The extract Datamatrix can then be decoded to determine the unique marker information that it contains.

It is important that the image processor is analysing images from the correct image capture device. The association between the two devices may change, eg if the processor is remote from the image capture device and a new rear device is added to a freight train (see below). In such cases, the reconfiguration should be straightforward to carry out and check. A physical key can therefore be provided for each image capture device unit that can be inserted into the image processor to secure communications between the two devices.

Devices may be connected by cabled or wireless connections. Wireless connections are most likely to be required when providing train integrity for a freight train. In this case, the rear device may be mounted on a wagon on which no power supply or other connection is available. To maximise battery life, the image capture device may be mounted on the rear wagon, but the image processor may be installed in the locomotive where power is available.

A communications link can be provided to connect the two devices. The link has sufficient bandwidth to send images to the image processor at the required rate (eg video rate). The link is as low power as possible, commensurate with a high quality link over the length of the train. Possible technologies are 'WiFi' (with extender units mounted on intermediate rolling stock where necessary) or emerging WiMAX technology.

Alternatively, if the rear unit also carries out image processing, then a communications link with a wide bandwidth is not necessary, and the ZigBee standard can be used for data transmission.

The link must be easy to install and in order to be compatible with all vehicle types, the antennas for the link may be directed underneath the train.

To support the communication of different components of the positioning system, the communications links should permit networked operation.

The communications system should be 'closed' by keys or similar devices, so that components of the positioning system only communicate with other components on the same train.

The train control interface unit provides the interface between the positioning system and a train control system that is using the positioning system for train detection.

It takes the input from image processor units and reports distance, speed, position and time error estimates to the train control system. It receives requests from the train control system for updates and also receives instructions to change system parameters (eg reporting frequency).

The interface unit provides alarms to the train control system of any failure or warning conditions within the positioning system.

## Claims

1. A system for determining the speed of a train, comprising:
an image capture device, for mounting on the train in such a position that it can capture a sequence of images of the environment ahead of or behind the train;
and
an image processor, for processing the images captured by the image capture device,
wherein the image processor processes said sequence of images by transforming each captured image of the environment ahead of or behind the train to give an image looking down on the tracks, and derives the speed of the train from the apparent motion of objects in the transformed images.

2. A system as claimed in claim 1, wherein the time at which each image in the sequence is captured is recorded, and the speed of the train is determined based on the time between images.

3. A system as claimed in claim 1 or claim 2, wherein the image processor derives the speed of the train by measuring how far in pixels a strip of pixels has moved from one transformed image to the next, calculating the distance moved per frame using a preset calibration factor for converting pixels into distance, and calculating the speed of the train using the time interval between frames.

4. A system as claimed in any preceding claim, wherein information about the track, such as the position of the rails, is extracted from the images by the image processor, and used to measure camera parameters, which can in turn be used to refine the speed estimate.

5. A system as claimed in any preceding claim, wherein the system can also determine the position of a train, in that the image processor also recognizes trackside markers, each of which uniquely identifies its position, thus deriving the position of the train from the identity of the marker.

6. A system as claimed in claim 5, wherein the position of the marker is uniquely identified by its appearance, which is analyzed by the image processor.

7. A system as claimed in claim 6, wherein the markers are in the form of 2D barcodes, such as Datamatrix barcodes.

8. A system as claimed in claim 6 or claim 7, wherein the current position of the train is calculated based on the speed of the train and the position of the last marker passed.

9. A system as claimed in any preceding claim, comprising a front image capture device and a rear image capture image device, which allow images of the environments in front of and behind the train to be captured.

10. A system as claimed in claim 9, wherein a single image processor associated with the front image capture device is used to process the images from the front image capture device and the rear image capture device, the rear image capture device being in communication with the image processor.

11. A system as claimed in claim 9 or claim 10, wherein the position of the rear of the train is used to determine whether the end of the train has passed a critical point, and this information is passed on to a control system.

12. A system as claimed in any of claims 9 to 11, wherein the rear image capture device is battery-powered.

13. A system as claimed in claim 10, wherein said rear image capture device is controlled from the front of the train to only capture images when instructed to do so.

14. A system as claimed in any of claims 9 to 13, wherein said rear image capture device is security-keyed to said front image capture device.

15. A system as claimed in any of claims 5 to 8, additionally comprising a train control interface, for reporting speed and position to a train control system.

16. A train on which a system as claimed in any preceding claim is installed.

## Patentansprüche

1. System zum Bestimmen der Geschwindigkeit eines Zugs, das enthält:
eine Bildaufnahmevorrichtung für die Montage am Zug an einer Position, in der sie eine Folge von Bildern der Umgebung vor oder hinter dem Zug aufnehmen kann; und
einen Bildprozessor, um die durch die Bildaufnahmevorrichtung aufgenommenen Bilder zu verarbeiten,
wobei der Bildprozessor die Folge von Bildern durch Transformieren jedes aufgenommenen Bildes der Umgebung vor oder hinter dem Zug verarbeitet, damit sich ein nach unten auf die Gleise gerichtetes Bild ergibt, und die Geschwindigkeit des Zugs aus der erkennbaren Bewegung von Objekten in den transformierten Bildern abgeleitet wird.

2. System nach Anspruch 1, wobei die Zeit, zu der jedes Bild in der Folge aufgenommen wird, aufgezeichnet wird und die Geschwindigkeit des Zugs anhand der Zeit zwischen Bildern bestimmt wird.

3. System nach Anspruch 1 oder Anspruch 2, wobei der Bildprozessor die Geschwindigkeit des Zugs durch Messen, wie weit, ausgedrückt in Pixeln, ein Streifen von Pixeln sich von einem transformierten Bild zum nächsten bewegt hat, durch Berechnen der Strecke, die pro Rahmen durchlaufen wird, unter Verwendung eines Kalibrierungsfaktors zum Umwandeln von Pixeln in eine Strecke und durch Berechnen der Geschwindigkeit des Zugs unter Verwendung des Zeitintervalls zwischen Rahmen ableitet.

4. System nach einem vorhergehenden Anspruch, wobei Informationen über die Gleise wie etwa die Position der Schienen durch den Bildprozessor aus den Bildern extrahiert und verwendet werden, um Kameraparameter zu messen, die ihrerseits verwendet werden können, um die Geschwindigkeitsschätzung zu verfeinern.

5. System nach einem vorhergehenden Anspruch, wobei das System außerdem die Position eines Zugs bestimmen kann, indem der Bildprozessor außerdem gleisseitige Markierungen erkennt, wovon jede ihre Position eindeutig identifiziert, wodurch die Position des Zugs anhand der Identität der Markierung abgeleitet wird.

6. System nach Anspruch 5, wobei die Position der Markierung durch ihr Erscheinungsbild, das durch den Bildprozessor analysiert wird, eindeutig identifiziert wird.

7. System nach Anspruch 6, wobei die Markierungen in Form von zweidimensionalen Strichcodes wie etwa von Datenmatrix-Strichcodes vorliegen.

8. System nach Anspruch 6 oder Anspruch 7, wobei die momentane Position des Zugs anhand der Geschwindigkeit des Zugs und der Position der zuletzt passierten Markierung berechnet wird.

9. System nach einem vorhergehenden Anspruch, das eine Vorwärtsbildaufnahmevorrichtung und eine Rückwärtsbildaufnahmevorrichtung enthält, die ermöglichen, Bilder der Umgebungen vor und hinter dem Zug aufzunehmen.

10. System nach Anspruch 9, wobei ein einzelner Bildprozessor, der der Vorwärtsbildaufnahmevorrichtung zugeordnet ist, verwendet wird, um die Bilder von der Vorwärtsbildaufnahmevorrichtung und der Rückwärtsbildaufnahmevorrichtung zu verarbeiten, wobei die Rückwärtsbildaufnahmevorrichtung mit dem Bildprozessor kommuniziert.

11. System nach Anspruch 9 oder Anspruch 10, wobei die Position der Rückseite des Zugs verwendet wird, um zu bestimmen, ob das Ende des Zugs einen kritischen Punkt passiert hat, wobei diese Informationen zu einem Steuersystem geleitet werden.

12. System nach einem der Ansprüche 9 bis 11, wobei die Rückwärtsbildaufnahmevorrichtung batteriebetrieben ist.

13. System nach Anspruch 10, wobei die Rückwärtsbildaufnahmevorrichtung von der Vorderseite des Zugs aus gesteuert wird, damit sie nur Bilder aufnimmt, wenn sie hierzu angewiesen wird.

14. System nach einem der Ansprüche 9 bis 13, wobei die Rückwärtsbildaufnahmevorrichtung mit der Vorwärtsbildaufnahmevorrichtung sicherheitsverbunden ist.

15. System nach einem der Ansprüche 5 bis 8, das außerdem eine Zugsteuerschnittstelle umfasst, um die Geschwindigkeit und die Position einem Zugsteuersystem zu übermitteln.

16. Zug, in dem ein System nach einem vorhergehenden Anspruch installiert ist.

## Revendications

1. Système pour déterminer la vitesse d'un train, comportant :
un dispositif de capture d'images, destiné à être monté sur le train dans une position lui permettant de capturer une séquence d'images de l'environnement à l'avant ou à l'arrière du train ; et
un processeur d'image pour traiter les images capturées par le dispositif de capture d'images,
dans lequel le processeur d'image traite ladite séquence d'images en transformant chaque image capturée de l'environnement à l'avant ou à l'arrière du train pour fournir une image regardant vers le bas sur les voies, et déduit la vitesse du train du déplacement apparent d'objets dans les images transformées.

2. Système comme revendiqué dans la revendication 1, dans lequel l'instant auquel chaque image dans la séquence est capturée est enregistré, et la vitesse du train est déterminée sur la base de l'intervalle de temps entre les images.

3. Système comme revendiqué dans la revendication 1 ou la revendication 2, dans lequel le processeur d'image déduit la vitesse du train en mesurant jusqu'où des pixels d'une bande de pixels se sont déplacés depuis une image transformée jusqu'à la suivante, en calculant la distance de déplacement par trame en utilisant un facteur d'étalonnage pré-défini pour convertir des pixels en distance, et en calculant la vitesse du train en utilisant l'intervalle de temps entre les trames.

4. Système selon l'une quelconque des revendications précédentes, dans lequel des informations concernant la voie, telles que la position des rails, sont extraites des images par l'intermédiaire du processeur d'image, et utilisées pour mesurer des paramètres d'appareil photographique, lesquels peuvent à leur tour être utilisés pour affiner l'estimation de vitesse.

5. Système selon l'une quelconque des revendications précédentes, dans lequel le système peut également déterminer la position d'un train, en ce sens que le processeur d'image reconnaît également des marqueurs de voie, chacun d'eux identifie uniquement sa position, de manière à déduire la position du train à partir de l'identité du marqueur.

6. Système comme revendiqué dans la revendication 5, dans lequel la position du marqueur est uniquement identifiée par son apparence, laquelle est analysée par le processeur d'image.

7. Système comme revendiqué dans la revendication 6, dans lequel les marqueurs sont sous la forme de codes à barres 2D, tels que des codes à barres Datamatrix.

8. Système comme revendiqué dans la revendication 6 ou la revendication 7, dans lequel la position courante du train est calculée sur la base de la vitesse du train et de la position du dernier marqueur passé.

9. Système selon l'une quelconque des revendications précédentes, comportant un dispositif de capture d'images avant et un dispositif de capture d'images arrière, lesquels permettent la capture d'images des environnements à l'avant et à l'arrière du train.

10. Système comme revendiqué dans la revendication 9, dans lequel un processeur d'image unique associé au dispositif de capture d'images avant est utilisé pour traiter les images du dispositif de capture d'images avant et du dispositif de capture d'images arrière, le dispositif de capture d'images arrière étant en communication avec le processeur d'image.

11. Système comme revendiqué dans la revendication 9 ou la revendication 10, dans lequel la position de l'arrière du train est utilisée pour déterminer si l'extrémité du train a passé un point critique, et ces informations sont transmises à un système de commande.

12. Selon l'une quelconque des revendications 9 à 11, dans lequel le dispositif de capture d'images arrière est alimenté par batterie.

13. Système comme revendiqué dans la revendication 10, dans lequel ledit dispositif de capture d'images arrière est commandé à partir de l'avant du train afin de capturer des images uniquement lorsqu'on lui ordonne de le faire.

14. Système selon l'une quelconque des revendications 9 à 13, dans lequel ledit dispositif de capture d'images arrière est verrouillé en sécurité audit dispositif de capture d'images avant.

15. Système selon l'une quelconque des revendications 5 à 8, comportant en outre une interface de commande de train, pour notifier la vitesse et la position à un système de commande de train.

16. Train sur lequel un système comme revendiqué dans l'une quelconque des revendications précédentes est installé.
